# EUROPÄISCHE PATENTSCHRIFT

(11) **EP 3 479 442 B1**
(45) Veröffentlichungstag und Bekanntmachung des Hinweises auf die Patenterteilung: **04.11.2020**
(21) Anmeldenummer: 17733996.7
(22) Anmeldetag: 13.06.2017
(51) Int. Cl.: H01R 43/00, H01R 9/26

(54) **AUFNAHMEELEMENT, ANORDNUNG UND VERFAHREN**
FRAME ELEMENT, ASSEMBLY AND METHOD
ELÉMENT D'ENCADREMENT, ASSEMBLAGE ET PROCÉDÉ

(30) Priorität: 01.07.2016 LU 93137
(43) Veröffentlichungstag der Anmeldung: 08.05.2019
(73) Patentinhaber: Phoenix Contact GmbH & Co. KG, 32825 Blomberg (DE)
(72) Erfinder: RUPPERT, Jens, 32839 Steinheim (DE)
(74) Vertreter: Muth, Bruno
(86) Internationale Anmeldenummer: PCT/EP2017/064343
(87) Internationale Veröffentlichungsnummer: WO 2018/001714

(56) Entgegenhaltungen:
- WO-A1-2010/057769
- DE-A1-102011 054 791

## Beschreibung

Die Erfindung betrifft ein Aufnahmeelement zum Aufnehmen und Transportieren eines Bauelements, insbesondere eines elektrischen Bauelements, wie beispielsweise einer Reihenklemme, mit einem Grundkörper, wobei in dem Grundkörper eine Ausnehmung in Form einer Einbuchtung ausgebildet ist, in welche das Bauelement einschiebbar ist. Ferner betrifft die Erfindung eine Anordnung und ein Verfahren zum automatisierten Handhaben von Bauelementen, insbesondere elektrischen Bauelementen.

Aus der WO 2010/057769 A1 ist eine Vorrichtung zur automatisierten Montage von anreihbaren Geräten, insbesondere Reihenklemmen, auf einer Montagebasis, insbesondere auf einer Tragschiene, mit einem Montageroboter, der einen beweglichen Greifer zum Greifen von jeweils wenigstens einem der anreihbaren Geräte aufweist, bekannt. Der Greifer und das Gerät, insbesondere die Reihenklemme, sind mit korrespondierenden form- und/oder kraftschlüssig zusammenwirkenden Aufnahme- und Montagekonturen versehen.

Die DE 10 2011 054 791 A1 offenbart eine Tragschienenführungsvorrichtung zum Bestücken einer Tragschiene mit elektrischen Bauelementen, welche eine Führungsbahn, entlang welcher die Tragschiene geführt ist, mindestens zwei sich an der Führungsbahn gegenüberliegend angeordnete Seitenführungselemente, zwischen welchen die Tragschiene geführt ist, und ein an der Führungsbahn angeordnetes, über einen Motor angetriebenes Reibrad, welches während eines Bestückungsvorganges der Tragschiene mit elektrischen Bauelementen gegen eine Unterseite der Tragschiene gepresst ist, aufweist, wobei das Reibrad in einem Bereich an der Führungsbahn angeordnet ist, in welchem das Bestücken der Tragschiene mit den elektrischen Bauelementen erfolgt.

Aus der DE 10 2009 017 999 A1 ist eine Vorrichtung und ein Verfahren zur automatisierten Montage von elektrischen Bauelementen, wie beispielsweise Reihenklemmen, auf einer Montagebasis, wie beispielsweise einer Tragschiene, bekannt. Die Vorrichtung weist einen zangenförmig ausgebildeten Greifer auf, welcher im Raum mittels eine Montageroboters beweglich ist, so dass die elektrischen Bauelemente mittels des Greifers nacheinander gegriffen und auf der Montagebasis aufgesetzt werden können. Um mit dem Greifer elektrische Bauelemente verschiedenster Ausgestaltung greifen zu können, ist es vorgesehen, den Greifer und die elektrischen Bauelemente mit korrespondierenden, form- und/oder kraftschlüssig zusammenwirkenden Aufnahme- und Montagekonturen zu versehen, die in verschiedenster Art und Weise ausgestaltet sein können. Die korrespondierenden Aufnahmekonturen können als zusammen- bzw. ineinandersteckbare Vorsprünge an dem Greifer bzw. dem Gehäuse der elektrischen Bauelemente und als mit den Vorsprüngen korrespondierende Ausnehmungen in dem Gehäuse der elektrischen Bauelemente bzw. dem Greifer ausgebildet sein. Die Vorsprünge können als Zapfen und die Ausnehmungen als korrespondierende Durchgangslöcher, Sacklöcher oder Nuten ausgebildet sein derart, dass die Zapfen und die Durchgangslöcher, Sacklöcher oder Nuten miteinander in Eingriff bringbar sind. Nachteilig bei dieser Ausgestaltung ist, dass nur besonders ausgestaltete elektrische Bauelemente handhabbar sind, so dass diese Vorrichtung und dieses Verfahren keine Flexibilität ermöglicht. Zudem können derartige Greifer die aufzunehmenden elektrischen Bauelemente beispielsweise in Form von sichtbaren Abdrücken an den Bauelementen beschädigen.

Der Erfindung liegt daher die Aufgabe zugrunde, ein Aufnahmeelement, eine Anordnung und ein Verfahren zur Verfügung zu stellen, mittels welchen eine sichere Aufnahme und ein sicherer Transport von elektrischen Bauelementen gewährleistet werden kann bei einer gleichzeitig erhöhten Flexibilität bei der Auswahl der aufzunehmenden und zu transportierenden elektrischen Bauelemente.

Die Lösung der Erfindung erfolgt mit den Merkmalen der unabhängigen Ansprüche. Zweckmäßige Ausgestaltungen und vorteilhafte Weiterbildungen der Erfindung sind in den Unteransprüchen angegeben.

Das Aufnahmeelement gemäß der Erfindung zeichnet sich dadurch aus, dass in dem Grundkörper eine Aufnahmekontur in Form der Ausnehmung eingebracht ist, wobei die Ausnehmung eine Form aufweist, welche an die Kontur des Bauelements angepasst ist, und wobei der Grundkörper einteilig geformt ist, und dass im Bereich der Ausnehmung ein federnd ausgebildeter Fixierbereich ausgebildet ist.

Das erfindungsgemäße Aufnahmeelement ist im Wesentlichen aus einem Grundkörper ausgebildet, welcher vorzugsweise kastenartig bzw. blockartig ausgebildet ist und damit eine rechteckförmige Außenkontur aufweist. In diesen Grundkörper ist eine Ausnehmung in Form einer Einbuchtung eingebracht, welche dazu dient, ein Bauelement, insbesondere ein elektrisches Bauelement, aufnehmen zu können. Die Ausnehmung ist vorzugsweise derart in dem Grundkörper ausgebildet, dass der Grundkörper ein in der Ausnehmung aufgenommenes elektrisches Bauelement an mindestens drei seiner Querseitenflächen und einer seiner Längsseitenfläche umschließen und stützen kann. Hierdurch sind eine besonders sichere Aufnahme und ein besonders sicherer Transport von elektrischen Bauelementen mit dem Aufnahmeelement möglich. Aufgrund der Möglichkeit des Abstützens eines aufgenommenen elektrischen Bauelements an mehreren seiner Seitenflächen innerhalb der Ausnehmung ist insbesondere auch ein Verkippen oder gar ein Herausfallen des elektrischen Bauelements aus dem Aufnahmeelement bei einem Transport des elektrischen Bauelements verhindert. Die Ausnehmung ist nicht in Form eines Durchbruchs in dem Grundkörper ausgebildet, sondern in Form einer Einbuchtung, so dass eine Rückwand im Bereich der Ausnehmung ausgebildet ist, an welcher eine Längsseitenfläche des elektrischen Bauelements im eingeschobenen Zustand anliegen kann. Das Aufnahmeelement ist damit gerade nicht zangenartig ausgebildet, sondern das Aufnahmeelement ist aus einem einteilig geformten Grundkörper ausgebildet, in welchem eine Aufnahmekontur in Form der Ausnehmung eingebracht ist. An den elektrischen Bauelementen muss selber keine besondere Ausgestaltung vorgesehen sein, um von dem Aufnahmeelement aufgenommen und transportiert werden zu können, so dass jede Art von elektrischen Bauelementen von den Aufnahmeelementen automatisiert gehandhabt werden kann. Damit ist eine erhöhte Flexibilität erreichbar. Zudem ermöglicht das Einschieben eines elektrischen Bauelements in das Aufnahmeelement anstelle eines insbesondere zangenartigen Greifens, dass Beschädigungen an dem aufzunehmenden elektrischen Bauelement vermieden werden können. Elektrische Bauelemente können insbesondere Reihenklemmen sein, wobei das Aufnahmeelement dann auch als Reihenklemmenaufnahmeelement bezeichnet werden kann.

Die Ausnehmung weist eine Form auf, welche an die Kontur des Bauelements angepasst ist. Die Ausnehmung kann dadurch in ihrer Kontur passgenau an die Außenkontur des aufzunehmenden elektrischen Bauelements angepasst sein. Bevorzugt ist die Form der Ausnehmung eine Negativkontur des aufzunehmenden elektrischen Bauelements. Für jede unterschiedliche Außenkontur eines elektrischen Bauelements kann damit ein Aufnahmeelement individuell vorgesehen sein, so dass lediglich das Aufnahmeelement an das aufzunehmende elektrische Bauelement angepasst wird, jedoch nicht das elektrische Bauelement selber.

Um ein Anpassen der Form der Ausnehmung in dem Grundkörper möglichst einfach, schnell und kostensparend erreichen zu können, ist es bevorzugt vorgesehen, dass der Grundkörper in einem Sinter- oder 3D-Druckverfahren hergestellt ist. Die Kontur der Ausnehmung kann dadurch individuell bei jedem einzeln herzustellenden Grundkörper bzw. Aufnahmeelement angepasst werden. Die Ausnehmung kann unmittelbar während des Sinter- oder 3D-Druckverfahrens in dem Grundkörper ausgebildet werden, so dass auf einfache Art und Weise auch komplexe Konturen der Ausnehmung in den Grundkörper eingebracht werden können. Zusätzlich oder alternativ ist es auch möglich, die Ausnehmung durch eine Fräsbearbeitung des Grundkörpers in den Grundkörper einzubringen. Der Grundkörper ist vorzugsweise aus einem Kunststoffmaterial ausgebildet.

Zur Erhöhung der Stabilität der Aufnahme des Bauelements in dem Aufnahmeelement ist es vorgesehen, dass im Bereich der Ausnehmung ein federnd ausgebildeter Fixierbereich ausgebildet ist. Mittels des Fixierbereichs kann eine sichere Klemmung des elektrischen Bauelements innerhalb der Ausnehmung erreicht werden. Im Bereich der Ausnehmung können auch zwei oder mehr derartiger Fixierbereiche ausgebildet sein, wobei die Fixierbereiche gleich oder aber auch unterschiedlich ausgestaltet sein können und dadurch auch unterschiedliche Funktionen erfüllen können.

Vorzugsweise ist der Fixierbereich in Form eines Federarmes ausgebildet. Der Federarm kann an einer die Ausnehmung begrenzende Innenfläche des Grundkörpers angeordnet sein. Mittels eines Federarmes ist eine leicht auszubildende und leicht zu lösende Fixierung eines elektrischen Bauelements innerhalb der Ausnehmung möglich.

Bevorzugt ist der Fixierbereich einteilig mit dem Grundkörper ausgebildet, so dass kein zu dem Grundkörper zusätzliches Bauteil vorgesehen werden muss, um eine Fixierung erreichen zu können. Ist der Grundkörper in einem Sinter- und/oder 3D-Druckverfahren hergestellt, kann der Fixierbereich bereits bei der Herstellung des Grundkörpers mit ausgebildet werden, wobei die Form und Ausgestaltung des Fixierbereichs ohne großen Aufwand individuell an die Bedürfnisse, insbesondere an die jeweilige Kontur des aufzunehmenden elektrischen Bauelements, angepasst werden kann.

An dem Grundkörper ist ferner vorzugsweise ein Aufnahmebereich für eine Transportvorrichtung ausgebildet. Über diesen Aufnahmebereich kann das Aufnahmeelement von der Transportvorrichtung gegriffen werden und zu einer beliebigen Position transportiert werden. Der Aufnahmebereich ist vorzugsweise beabstandet zu der Ausnehmung an dem Grundkörper ausgebildet. Bevorzugt ist der Aufnahmebereich an einer der Ausnehmung gegenüberliegenden Seitenfläche des Grundkörpers ausgebildet. Beispielsweise kann der Aufnahmebereich durch einen oder mehrere an dem Grundkörper angeformte Ansätze, welche von der Transportvorrichtung umgriffen werden können, und/oder durch eine oder mehrere in dem Grundkörper eingebrachte Öffnungen, in welche die Transportvorrichtung eingreifen kann, ausgebildet sein.

Die Erfindung sieht ferner eine Anordnung zum automatisierten Handhaben von Bauelementen vor. Die Anordnung weist ein Magazin, in welchem eine Vielzahl von Bauelementen lagerbar sind, einen Schieber, welcher in dem Magazin verschiebebeweglich geführt ist, ein wie vorstehend beschrieben aus- und weitergebildetes Aufnahmeelement, welches an einem Ende des Magazins positionierbar ist, und eine Transportvorrichtung zum Transport des Aufnahmeelements hin zu dem Magazin und von dem Magazin weg, auf.

Weiter sieht die Erfindung ein Verfahren zum automatisierten Handhaben von Bauelementen vor, bei welchem eine Transportvorrichtung ein wie vorstehend beschrieben aus- und weitergebildetes Aufnahmeelement hin zu einem Magazin transportiert und an einem Ende des Magazins positioniert, ein in dem Magazin verschiebebeweglich geführter Schieber die in dem Magazin gelagerten Bauelemente in Richtung des Aufnahmeelements derart schiebt, dass eines der Bauelemente in die in Form einer Einbuchtung ausgebildete Ausnehmung des Grundkörpers des Aufnahmeelements eingeschoben wird, und eine Transportvorrichtung das Aufnahmeelement zusammen mit dem eingeschobenen Bauelement aufnimmt und von dem Magazin weg transportiert.

Die Anordnung und das Verfahren dienen dazu Bauelemente insbesondere in Form von elektrischen Bauelementen wie Reihenklemmen automatisiert auf einer Tragschiene aufrasten zu können. Die zu verarbeitenden Bauelemente sind dabei zunächst in einem Magazin gelagert, in welchem die Bauelemente vorzugsweise in einer Reihe hintereinander angeordnet sind. Die in dem Magazin gelagerten Bauelemente können dabei unterschiedliche Ausgestaltungen bzw. unterschiedliche Konturen aufweisen. Innerhalb des Magazins sind die Bauelemente vorzugsweise verschiebbar gelagert, so dass ein in dem Magazin verschiebebeweglich geführter Schieber die Bauelemente zu einem vorzugsweise offenen Ende des Magazins schieben kann. An diesem offenen Ende kann mittels der Transportvorrichtung ein Aufnahmeelement, das mit seiner Kontur der Ausnehmung in dem Grundkörper an die Außenkontur des aufzunehmenden Bauelements angepasst ist, positioniert werden. Durch eine Verschiebebewegung des Schiebers in Richtung des an dem offenen Ende positionierten Aufnahmeelements werden die gesamten in dem Magazin gelagerten Bauelemente in Richtung des offenen Endes des Magazins geschoben, wobei das am nächsten an dem offenen Ende positionierte Bauelement in das Aufnahmeelement, insbesondere in die Ausnehmung des Grundkörpers des Aufnahmeelements, mittels des Schiebers eingeschoben bzw. hinein gedrückt wird, so dass das Bauelement in der Ausnehmung sicher gehalten ist, insbesondere in der Ausnehmung sicher fixiert bzw. eingerastet ist. Mittels der Transportvorrichtung kann anschließend das Aufnahmeelement zusammen mit dem darin aufgenommenen Bauelement von dem Magazin weg bewegt werden und beispielsweise hin zu einer Tragschiene bewegt werden, um das aufgenommene Bauelement darauf aufzurasten. Dieser Vorgang kann wiederholt werden, bis alle Bauelemente aus dem Magazin mittels jeweils eines Aufnahmeelementes entnommen sind. Bei jedem Vorgang kann das Aufnahmeelement individuell entsprechend der Form bzw. Kontur des aktuell aufzunehmenden Bauelements ausgewählt und mit der Transportvorrichtung hin zu dem Magazin bewegt werden. Dadurch können verschiedenartige Formen von Bauelementen in der erfindungsgemäßen Anordnung automatisiert gehandhabt werden, so dass die erfindungsgemäße Anordnung und das erfindungsgemäße Verfahren eine hohe Flexibilität bei der Auswahl der aufzunehmenden und zu transportierenden Bauelemente aufweisen.

Nachfolgend wird die Erfindung unter Bezugnahme auf die anliegenden Zeichnungen anhand bevorzugter Ausgestaltungen näher erläutert.

Es zeigen:
- Fig. 1: eine schematische Darstellung eines Aufnahmeelements gemäß der Erfindung,
- Fig. 2: eine schematische Darstellung des in Fig. 1 gezeigten Aufnahmeelements mit einem darin aufgenommenen Bauelement,
- Fig. 3: eine schematische Detaildarstellung eines Fixierbereichs des in Fig. 1 gezeigten Aufnahmeelements,
- Fig. 4: eine weitere schematische Darstellung eines Aufnahmeelements gemäß der Erfindung mit einem darin aufgenommenen Bauelement,
- Fig. 5: eine schematische Darstellung einer Rückansicht eines wie in Fig. 1 gezeigten Aufnahmeelements zusammen mit einer Transportvorrichtung, und
- Fig. 6a-c: eine schematische Darstellung einer Anordnung und eines Ablauf der Verfahrens zum automatisierten Handhaben von Bauelementen gemäß der Erfindung.

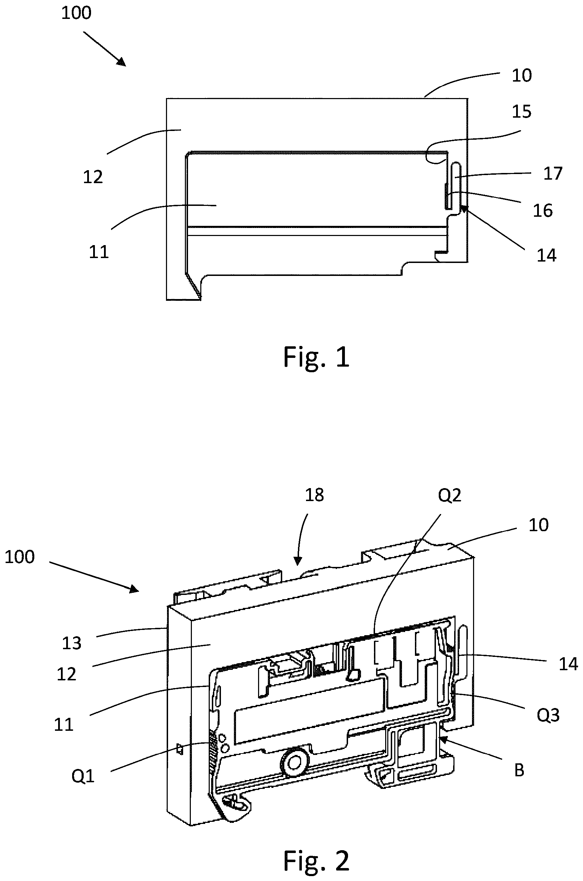

In Fig. 1 ist ein Aufnahmeelement 100 zum Aufnehmen und zum Transport eines wie in Fig. 2 gezeigten Bauelements B gezeigt, wobei das Bauelement B hier ein elektrisches Bauelement ist. Die elektrischen Bauelemente B sind bei den hier gezeigten Ausgestaltungen jeweils Reihenklemmen, welche unterschiedliche Formen aufweisen können.

Das Aufnahmeelement 100 weist einen Grundkörper 10 auf, welcher in seiner Außenkontur im Wesentlichen rechteckförmig und damit kastenförmig bzw. blockartig ausgebildet ist. In den Grundkörper 10 ist eine Ausnehmung 11 in Form einer Einbuchtung eingebracht, in welche das elektrische Bauelement B eingeschoben werden kann. Die Ausnehmung 11 ist an einer ersten Längsseitenfläche 12 des Grundkörpers 10 ausgebildet, so dass das elektrische Bauelement B seitlich in den Grundkörper 10 einschiebbar ist. Eine der ersten Längsseitenfläche 12 gegenüberliegende zweite Längsseitenfläche 13 des Grundkörpers 10 ist hingegen geschlossen ausgebildet und bildet eine Rückwand und damit eine Abstützfläche für das in die Ausnehmung 11 eingeschobene elektrische Bauelement B, so dass das eingeschobene elektrische Bauelement B an dieser zweiten Längsseitenfläche 13 anliegen, insbesondere flächig anliegen, kann. Die Ausnehmung 11 ist derart in dem Grundkörper 10 ausgebildet, dass der Grundkörper 10 ein in der Ausnehmung 11 aufgenommenes elektrisches Bauelement B an mindestens drei seiner Querseitenflächen Q1, Q2, Q3 und einer seiner Längsseitenfläche umschließen und stützen kann. Diese Längsseitenfläche des elektrischen Bauelements B liegt dann an der zweiten Längsseitenfläche 13 des Grundkörpers 10 an.

Die Ausnehmung 11 weist eine Form auf, welche an die Kontur des elektrischen Bauelements B angepasst ist, so dass das elektrische Bauelement B im Wesentlichen passgenau in der Ausnehmung 11 und damit in dem Aufnahmeelement 100 aufgenommen werden kann, wie in Fig. 2 zu erkennen ist.

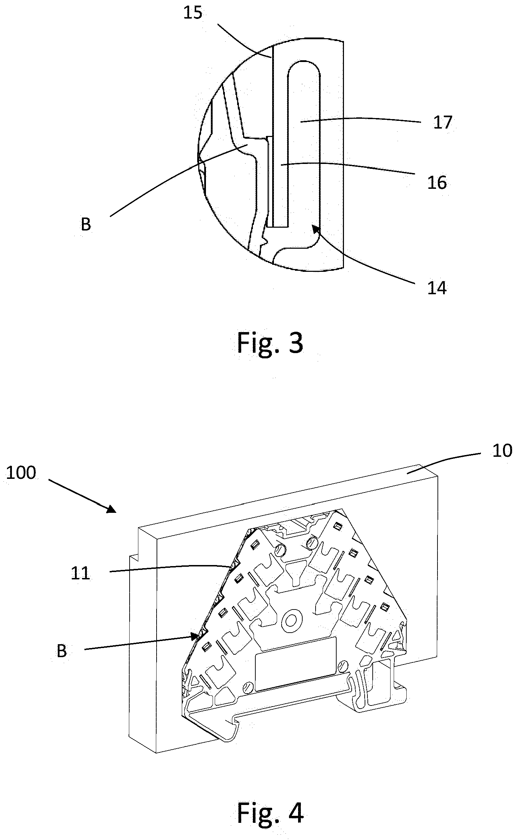

Um einen derartig passgenauen Sitz des elektrischen Bauelements B in dem Aufnahmeelement 100 erreichen zu können, ist der Grundkörper 10 des Aufnahmeelements 100 in einem Sinter- oder 3D-Druckverfahren hergestellt. Bei der Fertigung des Aufnahmeelements 100 bzw. des Grundkörpers 10 des Aufnahmeelements 100 kann dadurch für jede unterschiedliche Form des elektrischen Bauelements B der Grundkörper 10 und insbesondere die Form der Ausnehmung 11 in dem Grundkörper 10 individuell ausgebildet werden. Für jede Art bzw. Form eines elektrischen Bauelements B kann dadurch individuell ein Aufnahmeelement 100 schnell und kostengünstig mit einer hohen Präzision erstellt werden. Bei der in Fig. 1 und 2 gezeigten Ausgestaltung weist das elektrische Bauelement B eine rechteckförmige Kontur auf, so dass auch die Ausnehmung 11 eine rechteckförmige Kontur aufweist. Bei der in Fig. 4 gezeigten Ausgestaltung weist das elektrische Bauelement B eine trapezförmige Kontur auf, so dass auch die Ausnehmung 11 eine trapezförmige Kontur aufweist.

Zur Erhöhung der Stabilität der Fixierung des in einem Aufnahmeelement 100 aufgenommenen elektrischen Bauelements B ist bei der in Fig. 1 und 2 gezeigten Ausgestaltung im Bereich der Ausnehmung 11 ein federnd ausgebildeter Fixierbereich 14 ausgebildet. Fig. 3 zeigt eine Detaildarstellung dieses Federbereichs 14.

Der federnd ausgebildete Fixierbereich 14 ermöglicht ein sicheres Klemmen des elektrischen Bauelements B in der Ausnehmung 11. Der Fixierbereich 14 ist an einer die Ausnehmung 11 zumindest teilweise umschließenden Wandung 15 des Grundkörpers 10 ausgebildet. Bei der hier gezeigten Ausgestaltung ist der Fixierbereich 14 in Form eines Federarmes 16 ausgebildet, welcher federnd gegen die Querseite Q3 des eingeschobenen elektrischen Bauelements B drückt. Um die Federwirkung des Federarmes 16 zu erreichen, ist im Bereich des Federarmes 16 an der Wandung 15 ein Hinterschnitt 17 ausgebildet. Über den Fixierbereich 14 kann auch ein Lösen des elektrischen Bauelements B aus der Ausnehmung 11 erfolgen, indem der Federarm 16 von dem elektrischen Bauelement B weggeschwenkt wird und dadurch das elektrische Bauelement B an seiner Querseite Q3 freigegeben wird.

Der Fixierbereich 14 ist einstückig mit dem Grundkörper 10, insbesondere der Wandung 15 des Grundkörpers 10 ausgebildet, so dass der Fixierbereich 14 bei der Herstellung des Grundkörpers 10 insbesondere beim Sinter- oder 3D-Druckverfahren unmittelbar mit ausgebildet werden kann.

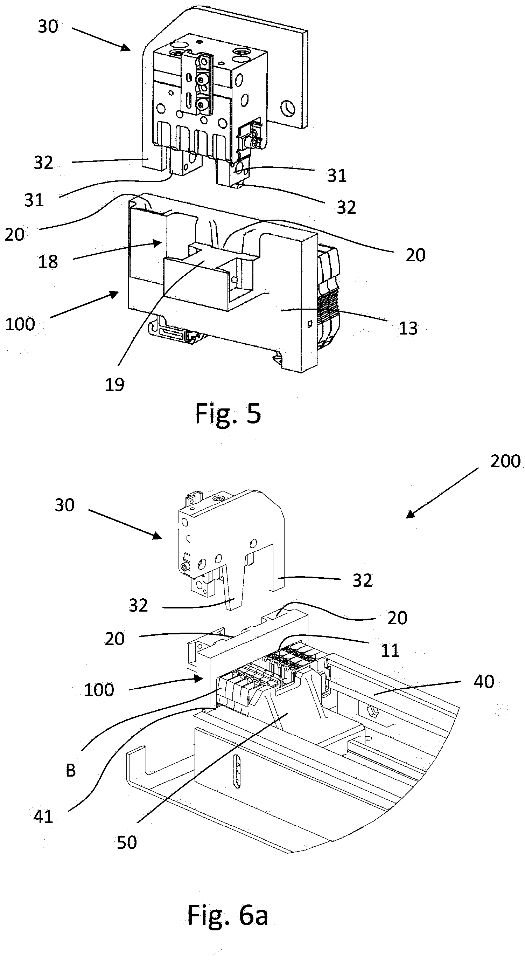

Damit eine wie beispielsweise in Fig. 5 gezeigte Transportvorrichtung 30 das Aufnahmeelement 10 greifen kann, ist an dem Grundkörper 10 des Aufnahmeelements 100 ein Aufnahmebereich 18 für die Transportvorrichtung 30 ausgebildet. Der Aufnahmebereich 18 ist an der zweiten Längsseitenfläche 13 des Grundkörpers 10 und damit gegenüberliegend zu der Ausnehmung 11 an dem Grundkörper 10 ausgebildet. Der Aufnahmebereich 18 ist bei der hier gezeigten Ausgestaltung durch einen an dem Grundkörper 10 angeformten blockartigen Ansatz 19, welcher von der Transportvorrichtung 30 durch an der Transportvorrichtung 30 ausgebildete Klemmbacken 31 umgriffen werden kann, und durch zwei an der Längsseitenfläche 13 des Grundkörpers 10 eingebrachte Öffnungen 20, in welche jeweils eine stegförmige Verlängerung 32 der Transportvorrichtung 30 eingreifen kann, ausgebildet.

In Fig. 6a-c ist eine Anordnung 200 zum automatisierten Handhaben von elektrischen Bauelementen B und ein Verfahrensablauf bei einer solchen Anordnung 200 gezeigt.

Die Anordnung 200 weist ein Magazin 40 auf, in welchem eine Vielzahl von elektrischen Bauelementen B in einer Reihe hintereinander angeordnet sind. Mittels des Aufnahmeelements 100 können die elektrischen Bauelemente B einzeln dem Magazin 40 entnommen werden und zu einer weiteren Station, beispielsweise einer Station, bei der die elektrischen Bauelemente B auf Tragschienen aufgerastet werden, transportiert werden.

Die Anordnung 200 weist weiter einen Schieber 50 auf, welcher verschiebebeweglich in dem Magazin 40 geführt ist, um die elektrischen Bauelemente B innerhalb des Magazins 40 zu bewegen, insbesondere zu verschieben. Der in dem Magazin 40 verschiebebeweglich geführte Schieber 50 kann die elektrischen Bauelemente B zu einem offenen Ende 41 des Magazins 40 schieben. An diesem offenen Ende 41 kann mittels der Transportvorrichtung 30 der Anordnung 200 eines der Aufnahmeelemente 100, das mit seiner Kontur der Ausnehmung 11 in dem Grundkörper 10 an die Außenkontur des gerade aufzunehmenden Bauelements B angepasst ist, positioniert werden, wie in Fig. 6a gezeigt ist.

Durch eine Verschiebebewegung des Schiebers 50 in Richtung des an dem offenen Ende 41 positionierten Aufnahmeelements 100 werden die gesamten in dem Magazin 40 gelagerten elektrischen Bauelemente B in Richtung des offenen Endes 41 des Magazins 40 geschoben, wobei dabei das am nächsten an dem offenen Ende 41 positionierte elektrische Bauelement B in das Aufnahmeelement 100, insbesondere in die Ausnehmung 11 des Grundkörpers 10 des Aufnahmeelements 100, eingeschoben bzw. hinein gedrückt wird, so dass dieses elektrische Bauelement B in der Ausnehmung 11 sicher gehalten ist, insbesondere in der Ausnehmung 11 sicher fixiert bzw. eingerastet ist.

Mittels der Transportvorrichtung 30 kann anschließend das Aufnahmeelement 100 zusammen mit dem darin aufgenommenen elektrischen Bauelement B von dem Magazin 40 weg bewegt werden und beispielsweise hin zu einer Tragschiene bewegt werden, um das aufgenommene elektrische Bauelemente B darauf aufzurasten. Dieser Vorgang kann wiederholt werden, bis alle elektrischen Bauelemente B aus dem Magazin 40 mittels jeweils eines Aufnahmeelementes 100 entnommen sind.

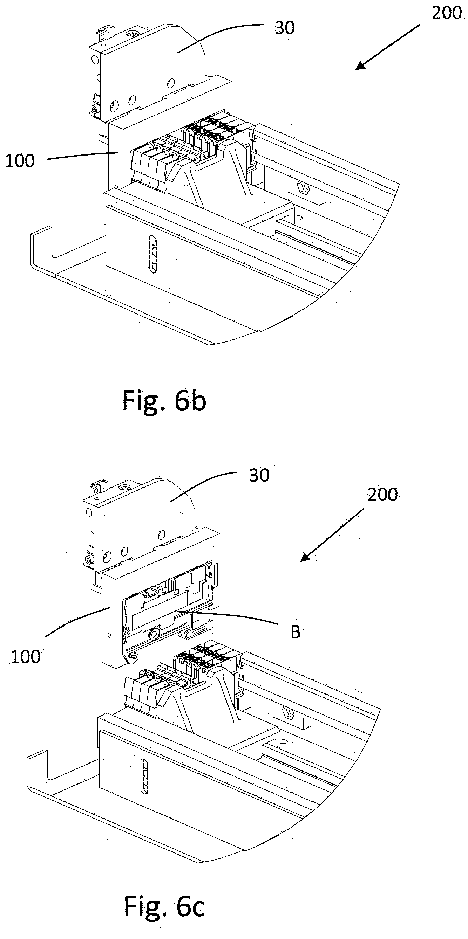

In Fig. 6b ist ein Vorgang gezeigt, wie die Transportvorrichtung 30 das an dem offenen Ende 41 des Magazins 40 positionierte Aufnahmeelement 100 greift und in Fig. 6c ist gezeigt, wie die Transportvorrichtung 30 das Aufnahmeelement 100 zusammen mit dem darin aufgenommenen elektrischen Bauelement B anhebt und von dem Magazin weg transportiert.

Bei jedem Vorgang wird das Aufnahmeelement 100 individuell entsprechend der Form bzw. Kontur des aktuell aufzunehmenden elektrischen Bauelements B ausgewählt und mit der Transportvorrichtung 30 hin zu dem Magazin 40 bewegt. Dadurch können verschiedenartige Formen von elektrischen Bauelementen B in der erfindungsgemäßen Anordnung 200 automatisiert gehandhabt werden.

Die Aufnahmeelemente 100 unterscheiden sich dabei lediglich hinsichtlich der Form der Ausnehmung 11, welche an die Kontur des aufzunehmenden elektrischen Bauelements B angepasst ist. In Bezug auf die Außenkontur des Grundkörpers 10 bzw. des Aufnahmeelements 100 sind hingegen alle Aufnahmeelemente 100 gleich ausgebildet, so dass alle Aufnahmeelemente 100 von ein und derselben Transportvorrichtung 30 aufgenommen und transportiert werden können.

### Bezugszeichenliste

| | |
|---|---|
| Aufnahmeelement | 100 |
| Anordnung | 200 |
| Grundkörper | 10 |
| Ausnehmung | 11 |
| Erste Längsseitenfläche | 12 |
| Zweite Längsseitenfläche | 13 |
| Fixierbereich | 14 |
| Wandung | 15 |
| Federarm | 16 |
| Hinterschnitt | 17 |
| Aufnahmebereich | 18 |
| Ansatz | 19 |
| Öffnung | 20 |
| Transportvorrichtung | 30 |
| Klemmbacke | 31 |
| Stegförmige Verlängerung | 32 |
| Magazin | 40 |
| Ende | 41 |
| Schieber | 50 |
| | |
| Bauelement | B |
| Querseitenfläche | Q1 |
| Querseitenfläche | Q2 |
| Querseitenfläche | Q3 |

## Patentansprüche

1. Aufnahmeelement (100) zum Aufnehmen und Transportieren eines Bauelements (B), mit einem Grundkörper (10), wobei in dem Grundkörper (10) eine Ausnehmung (11) in Form einer Einbuchtung ausgebildet ist, in welche das Bauelement (B) einschiebbar ist, **dadurch gekennzeichnet, dass** in dem Grundkörper (10) eine Aufnahmekontur in Form der Ausnehmung (11) eingebracht ist, wobei die Ausnehmung (11) eine Form aufweist, welche an die Kontur des Bauelements (B) angepasst ist, und wobei der Grundkörper (10) einteilig geformt ist, und dass im Bereich der Ausnehmung (11) ein federnd ausgebildeter Fixierbereich (14) ausgebildet ist.

2. Aufnahmeelement (100) nach Anspruch 1, **dadurch gekennzeichnet, dass** der Grundkörper (10) in einem Sinter- oder 3D-Druckverfahren hergestellt ist.

3. Aufnahmeelement (100) nach Anspruch 1 oder 2, **dadurch gekennzeichnet, dass** der Fixierbereich (14) in Form eines Federarmes (16) ausgebildet ist.

4. Aufnahmeelement (100) nach einem der Ansprüche 1 bis 3, **dadurch gekennzeichnet, dass** der Fixierbereich (14) einstückig mit dem Grundkörper (10) ausgebildet ist.

5. Aufnahmeelement (100) nach einem der Ansprüche 1 bis 4, **dadurch gekennzeichnet, dass** an dem Grundkörper (10) ein Aufnahmebereich (18) für eine Transportvorrichtung (30) ausgebildet ist.

6. Anordnung (200) zum automatisierten Handhaben von Bauelementen (B), mit einem Magazin (40), in welchem eine Vielzahl von Bauelementen (B) lagerbar sind, einem Schieber (50), welcher in dem Magazin (40) verschiebebeweglich geführt ist, einem nach einem der Ansprüche 1 bis 5 ausgebildeten Aufnahmeelement (100), welches an einem Ende (41) des Magazin positionierbar ist, und einer Transportvorrichtung (30) zum Transport des Aufnahmeelements (100) hin zu dem Magazin (40) und von dem Magazin (40) weg.

7. Verfahren zum automatisierten Handhaben von Bauelementen (B), bei welchem eine Transportvorrichtung (30) ein nach einem der Ansprüche 1 bis 5 ausgebildetes Aufnahmeelement (100) hin zu einem Magazin (40) transportiert und an einem Ende (41) des Magazins (40) positioniert, ein in dem Magazin (40) verschiebebeweglich geführter Schieber (50) die in dem Magazin (40) gelagerten Bauelemente (B) in Richtung des Aufnahmeelements (100) derart schiebt, dass eines der Bauelemente (B) in die in Form einer Einbuchtung ausgebildete Ausnehmung (11) des Grundkörpers (10) des Aufnahmeelements (100) eingeschoben wird, und eine Transportvorrichtung (30) das Aufnahmeelement (100) zusammen mit dem eingeschobenen Bauelement (B) aufnimmt und von dem Magazin (40) weg transportiert.

## Claims

1. Receiving element (100) for receiving and transporting a component (B), comprising a main body (10), wherein a recess (11) in the form of an indentation into which the component (B) can be pushed is formed in the main body (10), **characterized in that** a receiving contour in the form of the recess (11) is made in the main body (10), wherein the recess (11) has a shape which is matched to the contour of the component (B), and wherein the main body (10) is formed in one piece, and **in that** a fixing region (14) of spring-action design is formed in the region of the recess (11).

2. Receiving element (100) according to Claim 1, **characterized in that** the main body (10) is produced using a sintering or 3D printing process.

3. Receiving element (100) according to Claim 1 or 2, **characterized in that** the fixing region (14) is designed in the form of a spring arm (16).

4. Receiving element (100) according to one of Claims 1 to 3, **characterized in that** the fixing region (14) is formed in one piece with the main body (10).

5. Receiving element (100) according to one of Claims 1 to 4, **characterized in that** a receiving region (18) for a transportation apparatus (30) is formed on the main body (10).

6. Arrangement (200) for handling components (B) in an automated manner, comprising a magazine (40) in which a large number of components (B) can be stored, a slide (50) which is guided in a displaceable manner in the magazine (40), a receiving element (100) which is designed according to one of Claims 1 to 5 and can be positioned at one end (41) of the magazine, and a transportation apparatus (30) for transporting the receiving element (100) towards the magazine (40) and away from the magazine (40).

7. Method for handling components (B) in an automated manner, in which a transportation apparatus (30) transports a receiving element (100) which is designed according to one of Claims 1 to 5 towards a magazine (40) and positions the said receiving element at one end (41) of the magazine (40), a slide (50) which is guided in a displaceable manner in the magazine (40) slides the components (B), which are stored in the magazine (40), in the direction of the receiving element (100) in such a way that one of the components (B) is pushed into the recess (11), which is designed in the form of an indentation, of the main body (10) of the receiving element (100), and a transportation apparatus (30) receives the receiving element (100) together with the pushed-in component (B) and transports the said receiving element away from the magazine (40).

## Revendications

1. Élément de réception (100) destiné à recevoir et transporter un composant (B), comprenant un corps de base (10), un évidement (11) sous la forme d'un enfoncement dans lequel le composant (B) peut être inséré étant formé dans le corps de base (10), **caractérisé en ce qu'un** contour de réception sous la forme de l'évidement (11) est disposé dans le corps de base (10), l'évidement (11) présentant une forme qui est adaptée au contour du composant (B), et le corps de base (10) étant formé d'un seul tenant, et **en ce qu'**une zone de fixation (14) configurée élastiquement est formée dans la zone de l'évidement (11).

2. Élément de réception (100) selon la revendication 1, **caractérisé en ce que** le corps de base (10) est fabriqué dans un procédé de frittage ou d'impression 3D.

3. Élément de réception (100) selon la revendication 1 ou 2, **caractérisé en ce que** la zone de fixation (14) est configurée sous la forme d'un bras de ressort (16).

4. Élément de réception (100) selon l'une quelconque des revendications 1 à 3, **caractérisé en ce que** la zone de fixation (14) est configurée d'un seul tenant avec le corps de base (10).

5. Élément de réception (100) selon l'une quelconque des revendications 1 à 4, **caractérisé en ce qu'**une zone de réception (18) pour un dispositif de transport (30) est formée sur le corps de base (10).

6. Agencement (200) pour la manipulation automatisée de composants (B), comprenant un magasin (40), dans lequel une pluralité de composants (B) peuvent être stockés, une glissière (50), qui est acheminée de manière mobile en coulissement dans le magasin (40), un élément de réception (100) configuré selon l'une quelconque des revendications 1 à 5, qui peut être positionné à une extrémité (41) du magasin, et un dispositif de transport (30) pour le transport de l'élément de réception (100) vers le magasin (40) et à partir du magasin (40).

7. Procédé pour la manipulation automatisée de composants (B), selon lequel un dispositif de transport (30) transporte un élément de réception (100) configuré selon l'une quelconque des revendications 1 à 5 vers un magasin (40) et le positionne à une extrémité (41) du magasin (40), une glissière (50) acheminée de manière mobile en coulissement dans le magasin (40) déplace les composants (B) stockés dans le magasin (40) en direction de l'élément de réception (100), de telle sorte qu'un des composants (B) soit inséré dans l'évidement (11), configuré sous la forme d'un enfoncement, du corps de base (10) de l'élément de réception (100), et un dispositif de transport (30) reçoit l'élément de réception (100) conjointement avec le composant inséré (B) et le transporte à partir du magasin (40).
